# EUROPÄISCHE PATENTANMELDUNG

(11) **EP 4 850 857 A1**
(43) Veröffentlichungstag der Anmeldung: **09.12.2026**
(21) Anmeldenummer: 25180641.0
(22) Anmeldetag: 04.06.2025
(51) Int. Cl.: B24B 13/00, B24B 41/00, B29D 11/00, B65G 15/22, B65G 37/02, B65G 47/08, B24B 27/00

(54) **VERFAHREN UND ANLAGE SOWIE VERWENDUNG ZUR BEARBEITUNG OPTISCHER LINSEN**

(71) Anmelder: Schneider GmbH & Co. KG, 35112 Fronhausen (DE)
(72) Erfinder: Stry, Sandra, 35112 Fronhausen (DE); Braun, Pascal, 35287 Amöneburg (DE); Paar, Sascha, 35075 Gladenbach (DE)
(74) Vertreter: Von Rohr Patentanwälte Partnerschaft mbB

(57) **Zusammenfassung**

Es werden ein Verfahren und eine Anlage sowie deren Verwendung zur Bearbeitung optischer Werkstücke vorgeschlagen. Die Werkstücke werden einzelnen Bearbeitungseinrichtungen in Transportträgern zugefördert, wobei die Transportträger über Transfereinrichtungen von einer Hauptspur zum Vorbeifördern auf eine Nebenspur durch die Bearbeitungseinrichtungen und umgekehrt wechseln können. Zur Optimierung des Durchsatzes der Anlage ist vorgesehen, dass eine Gruppe von Transportträgern mit Werkstücken für eine Bearbeitung in derselben Bearbeitungseinrichtung unmittelbar nacheinander über dieselbe Transfereinrichtung zu derselben Bearbeitungseinrichtung zugefördert wird und die Querförderung des zweiten Transportträgers bereits dann beginnt, wenn der erste Transportträger einen Zwischenbereich der Transfereinrichtung zwischen den Spuren verlassen und/oder die andere Spur erreicht hat.

## Beschreibung

Die vorliegende Erfindung betrifft ein Verfahren zur Bearbeitung optischer Werkstücke, insbesondere Brillengläsern bzw. Brillenglasrohlingen, gemäß dem Oberbegriff des Anspruchs 1 und eine Anlage zur Bearbeitung optischer Werkstücke, insbesondere Brillengläsern bzw. Brillenglasrohlingen, gemäß dem Oberbegriff des Anspruchs 8 oder deren Verwendung gemäß dem Oberbegriff des Anspruch 15.

Die Bearbeitung von optischen Werkstücken, insbesondere Brillengläsern bzw. Brillenglasrohlingen, erfolgt in mehreren Schritten bzw. in mehreren separaten Bearbeitungseinrichtungen. Die Bearbeitung kann insbesondere ein Blocken, Fügen oder sonstiges (temporäres) Verbinden, wie Kleben mit Klebeband, ein Verzögern, Zwischenspeichern bzw. Sortieren bzw. Stacken, eine formgebende oder spanende Bearbeitung, ein Polieren, ein Beschichten, ein Prüfen bzw. Messen, ein Markieren, ein Beschichten und/oder ein Reinigen umfassen.

Die vorliegende Erfindung betrifft insbesondere eine Anlage und ein Verfahren zur Bearbeitung von optischen Werkstücken bzw. Linsen, besonders bevorzugt Brillengläsern oder Brillenglasrohlingen, mit mehreren, insbesondere (weitgehend) unabhängig arbeitenden Bearbeitungseinrichtungen für verschiedene Bearbeitungen. Besonders bevorzugt sind mehrere Bearbeitungseinrichtungen für die gleiche Bearbeitung vorgesehen, insbesondere um den Durchsatz der Anlage zu erhöhen.

Die WO 2013/131656 A2 offenbart eine Anlage und ein Verfahren zum Bearbeiten optischer Linsen, wobei Transportträger mit den Linsen unabhängig arbeitenden Bearbeitungseinrichtungen wahlweise mittels eines Transfersystems zugefördert werden. Die Bearbeitungseinrichtungen sind vorzugsweise in einer Reihe angeordnet. Es wird eine Hauptspur zur Förderung der Transportträger an den Bearbeitungsvorrichtungen vorbei und eine Nebenspur zur Förderung der Transportträger zu und von den Bearbeitungseinrichtungen gebildet. Insbesondere verlaufen beide Transportspuren parallel. Mittels Transfereinrichtungen können die Transportträger zwischen den Spuren wechseln, so dass die Transportträger bedarfsweise zu einer Bearbeitungseinrichtung hin durch Wechsel in die Nebenspur und von einer Bearbeitungseinrichtung nach erfolgter Bearbeitung durch Wechseln in die Hauptspur oder Weiterfördern an die nächste Bearbeitungseinrichtung weggefördert werden können. Das Transfersystem weist vorzugsweise Bänder oder Gurte zum Fördern der Transportträger auf, die insbesondere kontinuierlich laufen, wobei die Transportträger durch Stoppeinrichtungen bedarfsweise angehalten werden. Die Anlage bzw. das Transfersystem ist aus verschiedenen Fördereinrichtungen zur Längsförderung und Querförderung, Stoppeinrichtungen, Sensoren und dergleichen aufgebaut, um die entsprechende Zu- und Wegförderung zu ermöglichen. Die Steuerung der verschiedenen Einrichtungen ist relativ aufwendig, und die Fördergeschwindigkeit ist üblicherweise festgelegt.

Die WO 2017/080639 A1 offenbart eine ähnliche Anlage und ein ähnliches Verfahren zum Bearbeiten optischer Linsen, wobei eine Zuordnung von Werkstücken zu Bearbeitungslinien mit jeweils mehreren Bearbeitungseinrichtungen bei Erfassung eines neuen zu bearbeitenden Werkstücks und/oder vor tatsächlicher Übergabe eines Werkstücks an die jeweilige Bearbeitungslinie überprüft und optional geändert wird. Bis zur tatsächlichen Übergabe an eine Bearbeitungslinie werden die Werkstücke optional zirkuliert. Weiter wird die Zuordnung bereits einer Bearbeitungseinrichtung zugeordneter Werkstücke nach oder vor jeder Bearbeitung oder vor jeder Zuführung überprüft und optional geändert. Außerdem können Aufträge für die Bearbeitung von Werkstücken von einer Systemsteuerung wahlweise an verschiedene Standorte übermittelt werden.

Generell ist eine weitergehende Optimierung des Einsatzes der Bearbeitungseinrichtungen und Steigerung des Durchsatzes der Anlage schwierig, aber wünschenswert.

Der vorliegenden Erfindung liegt die Aufgabe zugrunde, ein Verfahren und eine Anlage zur Bearbeitung optischer Werkstücke anzugeben, wobei ein optimierter Durchsatz ermöglicht wird.

Die obige Aufgabe wird durch ein Verfahren gemäß Anspruch 1 oder durch eine Anlage gemäß Anspruch 8 oder durch eine Verwendung gemäß Anspruch 15 gelöst. Vorteilhafte Weiterbildungen sind Gegenstand der Unteransprüche.

Gemäß einem ersten Aspekt der vorliegenden Erfindung werden die Transportträger mit den zu bearbeitenden Werkstücken vorzugsweise derart paarweise bzw. gruppenweise geroutet, also vom Transfersystem zugefördert, dass mindestens zwei Transportträger unmittelbar hintereinander einer nachfolgenden Bearbeitung bzw. derselben Bearbeitungseinrichtung, besonders bevorzugt über dieselbe Förder- oder Transfereinrichtung, zugefördert werden.

Eine unabhängige bzw. allgemeinere Idee der vorliegenden Erfindung zur Optimierung des Durchsatzes der Anlage und/oder bei einer nachfolgenden Bearbeitung liegt insbesondere darin bzw. in der Verwendung der Anlage, um eine Gruppe von zwei oder mehr Transportträgern zu bilden, wobei die Transportträger dieser Gruppe zwischengespeichert und/oder unmittelbar nacheinander von einem Transfersystem bzw. einer Transfereinrichtung insbesondere derselben Bearbeitungseinrichtung zugefördert oder an eine nachgeordnete Bearbeitung weitergefördert werden. Besonders bevorzugt werden die Transportträger für die Gruppe derart ausgewählt, dass deren Werkstücke derselben oder einer gleichartigen Bearbeitung bedürfen und/oder deren Werkstücke - insbesondere hinsichtlich Material, Krümmung, Größe und/oder Dicke - gleichartig sind.

Die Transfereinrichtungen dienen vorzugsweise einem Wechsel zwischen Transportspuren, insbesondere von einer an den Bearbeitungseinrichtungen vorbeilaufenden Hauptspur zu einer in die Bearbeitungseinrichtungen verlaufenden Nebenspur und/oder umgekehrt.

Gemäß einem zweiten Aspekt der vorliegenden Erfindung, der auch unabhängig, aber insbesondere auch in Kombination mit dem vorgenannten Aspekt realisiert werden kann, ist vorzugsweise vorgesehen, dass die Transfereinrichtung den nächsten Transportträger bereits dann querfördert und insbesondere in einen Querförderbereich oder Zwischenbereich zwischen zwei Transportspuren aufnimmt, wenn der vorherige Transportträger den Zwischenbereich dieser Transfereinrichtung verlassen oder die andere Transportspur, insbesondere Nebenspur, erreicht hat.

Jeder der beiden vorgenannten Aspekte für sich genommen, aber auch deren Kombination, ermöglicht eine überraschend deutliche Steigerung des Durchsatzes der gesamten Anlage. Insbesondere ist so eine Verdoppelung des Durchsatzes möglich. Dies lässt sich insbesondere dadurch erklären, dass Wartezeiten auf die vorgenannte Weise minimiert werden können. Üblicherweise werden die Transportträger nämlich mit Gurtförderern oder Bändern mit vorzugsweise konstanter Geschwindigkeit entlang der Hauptspur gefördert und vor den Transfereinrichtungen oder sonstigen Einrichtungen zur Ausschleusung oder Einschleusung von Transportträgern bzw. zum Wechsel zwischen den Transportspuren entsprechend angehalten. Dies verursacht entsprechende Wartezeiten, die entsprechend den Durchsatz der Anlage verringern, insbesondere wenn die zu bearbeitenden Werkstücke nicht optimal zu den Bearbeitungseinrichtungen mit den zeitkritischen Bearbeitungen und von diesen weggefördert werden.

Die vorgenannten und nachfolgenden Aspekte und Merkmale der vorliegenden Erfindung können beliebig miteinander kombiniert, aber auch jeweils unabhängig voneinander realisiert werden.

Weitere Aspekte, Merkmale, Vorteile und Eigenschaften der vorliegenden Erfindung ergeben sich aus den Ansprüchen und der nachfolgenden Beschreibung eines bevorzugten Ausführungsbeispiels anhand der Zeichnung. Es zeigt:
- Fig. 1: eine schematische Darstellung einer vorschlagsgemäßen Anlage mit mehreren Bearbeitungseinrichtungen und Transportspuren sowie Transfereinrichtungen;
- Fig. 2: eine schematische Darstellung eines Transportträgers mit zu bearbeitenden Linsen; und
- Fig. 3: eine Transfereinrichtung der vorschlagsgemäßen Anlage.

**In** den Figuren werden für gleiche oder gleichartige Komponenten und Einrichtungen die gleichen Bezugszeichen verwendet, wobei sich die gleichen oder entsprechenden Vorteile und Eigenschaften ergeben, auch wenn eine wiederholte Beschreibung weggelassen ist.

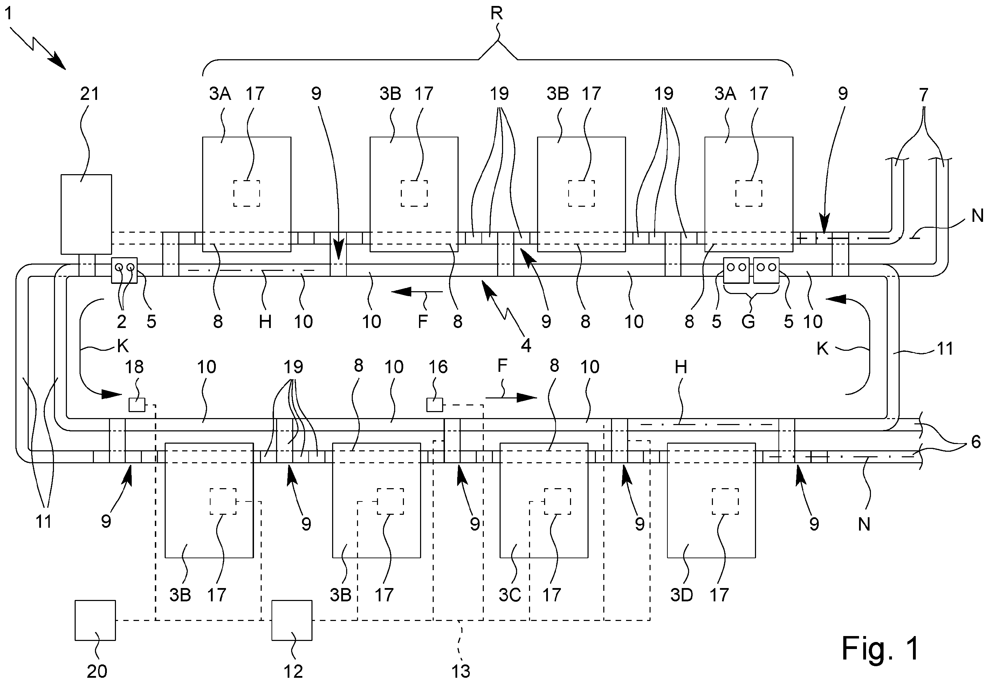

Fig. 1 zeigt in einer schematischen Darstellung eine vorschlagsgemäße Anlage 1 zur Bearbeitung von optischen Werkstücken, insbesondere Linsen, Brillenglasrohlingen bzw. Linsen 2, also eine Linsenbearbeitungsanlage. Nachfolgend wird als besonders bevorzugtes Ausführungsbeispiel primär auf die Bearbeitung von Linsen für Brillen bzw. von Brillengläsern näher eingegangen. Besonders bevorzugt werden Linsen oder Linsenrohlinge aus Kunststoff bearbeitet. Vorzugsweise gelten diese Ausführungen jedoch entsprechend auch für das Bearbeiten sonstiger Linsen 2 oder generell optischer Werkstücke.

Nachfolgend wird aus Vereinfachungsgründen bei der Beschreibung nur von Linsen 2 gesprochen, auch wenn es sich neben der Brillenglasbearbeitung bzw. Brillenglasherstellung insbesondere auch um sonstige optische Werkstücke handeln kann, wie bereits erläutert.

Die Bearbeitung der Linsen 2 erfolgt in mehreren Schritten bzw. in mehreren separaten Bearbeitungseinrichtungen 3.

Die Bearbeitung bzw. Bearbeitungseinrichtung 3 kann insbesondere ein Blocken, Fügen oder sonstiges (temporäres) Verbinden, wie Kleben mit Klebeband, ein Verzögern, Zwischenspeichern bzw. Stacken oder Sortieren, eine formgebende oder spanende Bearbeitung, ein Polieren, ein Beschichten, ein Prüfen bzw. Messen, ein Markieren, ein Beschichten und/oder ein Reinigen und/oder Randbearbeiten, Einpassen in eine Fassung und/oder Verpacken umfassen.

Die Anlage 1 weist mehrere separate Bearbeitungseinrichtungen 3 zur unabhängigen Bearbeitung der Linsen 2 auf. Beim Darstellungsbeispiel weist die Anlage 1 insbesondere mindestens eine Bearbeitungseinrichtung 3A zur formgebenden, insbesondere spanenden und/oder fräsenden Bearbeitung von Linsen 2, eine Bearbeitungseinrichtung 3B zum Polieren von Linsen 2, eine Bearbeitungseinrichtung 3C zum Prüfen bzw. Messen von Linsen 2 und/oder eine Bearbeitungseinrichtung 3D zum Markieren von Linsen 2 auf.

Insbesondere sind mehrere gleichartige Bearbeitungseinrichtungen 3, beispielsweise zwei oder mehr Bearbeitungseinrichtungen 3 für die gleiche Bearbeitung vorhanden bzw. in die Anlage 1 integriert. Insbesondere sind mehrere Bearbeitungseinrichtungen 3A zur formgebenden Bearbeitung und/oder mehrere Bearbeitungseinrichtungen 3B zum Polieren vorgesehen. Dies hängt insbesondere von dem Durchsatz der verschiedenen Bearbeitungseinrichtungen 3 und/oder den gewünschten Bearbeitungen ab.

Ein besonderer Vorteil der vorschlagsgemäßen Anlage 1 besteht darin, dass zusätzliche Bearbeitungseinrichtungen 3 auch später je nach Bedarf noch in die Anlage 1 sehr leicht integriert bzw. eingebunden werden können, Erweiterungen also sehr einfach erfolgen können.

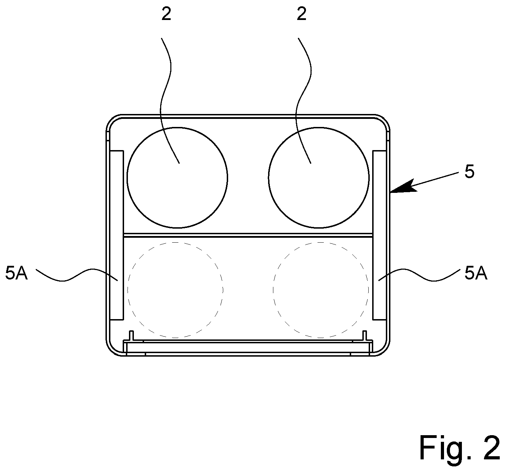

Die Anlage 1 weist vorzugsweise ein Transfersystem 4 zum Transport der Linsen 2 bzw. von Transportträgern 5 (vgl. Fig.2) mit den Linsen 2 zu und von den Bearbeitungseinrichtungen 3 auf. Das Transfersystem 4 führt die Linsen 2 bzw. Transportträger 5 insbesondere den Bearbeitungseinrichtungen 3 zu und/oder transportiert bzw. fördert die Linsen 2 bzw. Transportträger 5 nach einer erfolgten Bearbeitung in einer Bearbeitungseinrichtung 3 zu einer anderen Bearbeitungseinrichtung 3 oder zu einem Ausgang bzw. einer Abgabe 6, wie in Fig. 1 angedeutet. Die Abgabe 6 kann beispielsweise eine Übergabeeinrichtung, einen Rolltisch und/oder sonstige Speichereinrichtung umfassen oder daraus gebildet sein. Beim Darstellungsbeispiel sind optional zwei Ausgänge bzw. Abgaben 6, insbesondere jeweils einen für jede Spur H und N, vorgesehen.

Die Anlage 1 weist neben der Abgabe 6 vorzugsweise auch einen Eingang bzw. eine Aufnahme 7 auf, die dem Aufnehmen zu bearbeitender Linsen 2 bzw. von die zu bearbeitenden Linsen 2 tragenden Transportträgern 5 dient. Beim Darstellungsbeispiel sind optional zwei Eingänge bzw. Aufnahmen 7, insbesondere jeweils einen für jede Spur H und N, vorgesehen.

Jeder Bearbeitungseinrichtung 3 ist vorzugsweise eine (eigene) Fördereinrichtung 8 zur insbesondere linearen Förderung mindestens einer Linse 2 oder eines Transportträgers 5 zugeordnet. Insbesondere ist die zugeordnete Fördereinrichtung 8 in die jeweilige Bearbeitungseinrichtung 3 integriert bzw. eingebaut oder an diese angebaut. Die Fördereinrichtung 8 ist vorzugsweise als Förderband ausgebildet.

Die Fördereinrichtungen 8 der Bearbeitungseinrichtungen 3 werden vorzugsweise jeweils von der jeweiligen Bearbeitungseinrichtung 3 bzw. deren Maschinensteuerung 17 gesteuert.

Besonders bevorzugt sind die Bearbeitungseinrichtungen 3 möglichst kompakt oder zumindest im wesentlichen quaderartig oder mit rechteckiger Grundfläche ausgebildet, wobei die Fördereinrichtungen 8 jeweils vorzugsweise hinten, also an einer einem Steuer- oder Bedienpult der Bearbeitungseinrichtung 3 gegenüberliegenden Seite, bzw. an einer Schmalseite der jeweiligen Bearbeitungseinrichtung 3 angeordnet sind. Grundsätzlich ist jedoch auch eine sonstige Anordnung, insbesondere an einer Längsseite der jeweiligen Bearbeitungseinrichtung 3 möglich.

Besonders bevorzugt ragen die Fördereinrichtungen 8 seitlich über die jeweilige Bearbeitungseinrichtung 3 nicht oder nur gering und/oder um ein einheitliches Maß vor. Insbesondere entspricht die Länge der Fördereinrichtung 8 zumindest im Wesentlichen der Breite der jeweiligen Bearbeitungseinrichtung 3.

Vorzugsweise wird die Gangbreite zwischen benachbarten Bearbeitungseinrichtungen 3 durch eine dazwischen angeordnete Transfereinrichtung 9 festgelegt, auf die später noch eingegangen wird. Die Gangbreite beträgt zum Beispiel etwa 60 cm. Ein Gang zwischen benachbarten Bearbeitungseinrichtungen 3 ist insbesondere für Wartungs- oder Reparaturzwecke und/oder auch zum Nachfüllen von Betriebsmitteln oder dgl. erforderlich bzw. wünschenswert.

Mehrere oder alle Bearbeitungseinrichtungen 3 werden vorzugsweise in einer oder mehreren Reihen R bzw. nebeneinander angeordnet bzw. aufgestellt, so dass die Fördereinrichtungen 8 einer Gruppe bzw. Reihe R von Bearbeitungseinrichtungen 3 zumindest im Wesentlichen in einer Linie verlaufen und/oder eine vorzugsweise zumindest im Wesentlichen geradlinige erste Transportspur bzw. Nebenspur N (strichpunktiert in Fig. 1 angedeutet) bilden.

Die Anlage 1 bzw. das Transfersystem 4 weist auf bzw. bildet vorzugsweise eine zweite Transportspur bzw. Hauptspur H, die besonders bevorzugt einen Ring zum Zirkulieren bzw. zur Kreisförderung K von Linsen 2 bzw. Transportträgern 5 bildet.

Es ist anzumerken, dass die Hauptspur H und/oder Nebenspur N vorzugsweise zumindest im Wesentlichen einem Polygonzug entsprechen oder bilden, also aus verschiedenen gradlinigen Strecken bzw. Abschnitten aufgebaut sein und beispielsweise über Eck, in U-Form oder - wie hier - ringförmig verlaufen kann bzw. können.

Die Hauptspur H verläuft vorzugsweise ebenfalls wie die Nebenspur N zumindest im Wesentlichen geradlinig oder polygonartig und/oder parallel zu der Nebenspur N.

Entlang dieser Abschnitte sind vorzugsweise jeweils mehrere Bearbeitungseinrichtungen 3 in einer Reihe R derart angeordnet, dass diese Bearbeitungseinrichtungen 3 mit ihren Fördereinrichtungen 8 entlang dieser Strecke bzw. dieses Abschnitts angeordnet sind. Dies führt zu einer großen Flexibilität bei Erweiterung(en) der vorschlagsgemäßen Anlage 1, da insbesondere quasi beliebige Verlängerungen, insbesondere beim Anbau oder Ausbau der Anlage 1, insbesondere durch Einbindung zusätzlicher Bearbeitungseinrichtungen 3, und/oder bei entsprechendem Ausbau des Transfersystems 4 ermöglicht werden.

Die Anlage 1 bzw. das Transfersystem 4 weist vorzugsweise mehrere Transfereinrichtungen 9 auf, um zwischen den Transportspuren (Hauptspur H und Nebenspur N) wechseln zu können.

Die meisten Transfereinrichtungen 3 sind vorzugsweise jeweils zwischen zwei benachbarten Bearbeitungseinrichtungen 3 (einer Reihe) angeordnet sind. Vorzugsweise sind Transfereinrichtungen 9 zwischen einigen oder allen (unmittelbar) benachbarten Bearbeitungseinrichtungen 3 und/oder vorzugsweise auch am Anfang und/oder Ende einer Reihe R angeordnet.

Die Transfereinrichtungen 9 sind vorzugsweise jeweils zur Aufnahme und insbesondere temporären Zwischenspeicherung mindestens einer Linse 2 oder eines Transportträgers 5 und/oder zur bedarfsweisen Weiterförderung dieser Linse 2 bzw. dieses Transportträgers 5 wahlweise an die Fördereinrichtung 8 einer nachfolgenden Bearbeitungseinrichtung 3 oder an die andere Transportspur ausgebildet.

Die Anlage 1 bzw. das Transfersystem 4 weist vorzugsweise ein oder mehrere Fördereinrichtungen 10 auf, die insbesondere in Reihe bzw. hintereinander angeordnet sind, um die Hauptspur H zu bilden. Die Linsen 2 bzw. Transportträger 5 können also entlang dieser mittels einer oder mehrerer Fördereinrichtungen 10 transportiert bzw. gefördert werden.

Die Fördereinrichtungen 10 der Hauptspur H sind vorzugsweise unabhängig voneinander steuerbar, um Linsen 2 bzw. Transportträger 5 unabhängig voneinander bzw. abschnittsweise auch entlang der Hauptspur H fördern zu können. Beispielsweise kann eine Linse 2 bzw. ein Transportträger 5 auf einer Fördereinrichtung 10 angehalten werden, während eine andere Linse 2 bzw. ein anderer Transportträger 5 auf einer anderen Fördereinrichtung 10 der Hauptspur H weiter gefördert wird.

Es ist aufgrund des vorzugsweise segmentartigen oder abschnittsweisen Aufbaus der Hauptspur H bzw. aufgrund des Einsatzes unabhängig steuerbarer Fördereinrichtungen 10 für die Hauptspur H grundsätzlich auch möglich, dass einzelne Fördereinrichtungen 10 entgegengesetzt zur Förderrichtung F also rückwärts fördern, während andere Fördereinrichtungen 10 der Hauptspur H beispielsweise anhalten oder weiter vorwärts fördern.

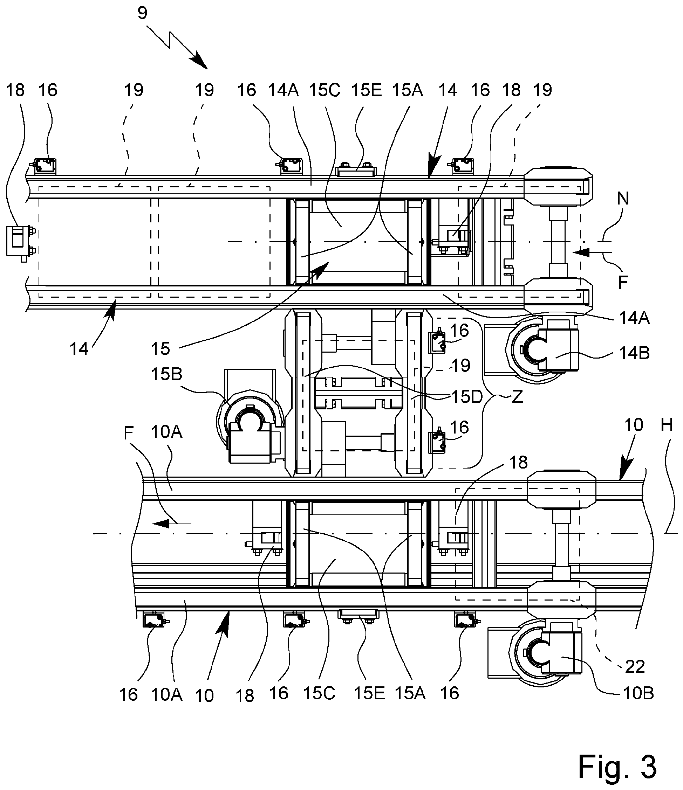

Alternativ oder zusätzlich zu der unterschiedlichen Steuerung von Fördereinrichtungen 10 und/oder einer Rückwärtsförderung erfolgt das ein Anhalten von Linsen 2 bzw. Transportträgern 5 besonders bevorzugt durch entsprechende Stoppeinrichtungen o. dgl. (siehe beispielsweise Stoppeinrichtungen 18 in der Hauptspur H in Fig. 3), so dass in diesem Fall die Fördereinrichtung(en) 10 weiter bzw. kontinuierlich betrieben werden kann bzw. können. Dies gilt vorzugsweise für einige oder alle Fördereinrichtungen 10 der Hauptspur H und/oder optional auch für die Nebenspur N.

Zwischen den Fördereinrichtungen 10 der Hauptspur H können bedarfsweise die Transfereinrichtungen 9 angeordnet sein. Jedoch können die Transfereinrichtungen 9 alternativ jeweils auch direkt auf eine zugeordnete Fördereinrichtung 10 der Hauptspur H zugreifen bzw. zu oder von der zugeordneten Fördereinrichtung 10 der Hauptspur H fördern, wie später beispielhaft noch anhand von Fig. 3 erläutert. **In** diesem Fall können die Fördereinrichtungen 10 hintereinander ohne die in Fig. 1 schematisch angedeutete Zwischenschaltung von Transfereinrichtungen 9 angeordnet werden.

Die Förderrichtung F der Nebenspur N ist in Fig. 1 durch einen Pfeil angedeutet. Die Hauptspur H fördert vorzugsweise in die gleiche Richtung.

Die Hauptspur H dient insbesondere dazu, dass Linsen 2 bzw. Transportträger 5 an einzelnen Bearbeitungseinrichtungen 3 vorbei gefördert werden können. Beispielsweise kann eine solche Vorbeiförderung zur besseren Auslastung der Bearbeitungseinrichtungen 3, zur Förderung zu einer bestimmten Bearbeitungseinrichtung 3 für eine spezielle Bearbeitung, beispielsweise aufgrund eines Ausfalls oder einer Auslastung einer Bearbeitungseinrichtung 3 oder aufgrund einer nicht erforderlichen Bearbeitung durch eine Bearbeitungseinrichtung 3, gewünscht oder erforderlich sein. Alternativ oder zusätzlich kann die Vorbeiförderung auch einem Überholen von anderen Linsen 2 bzw. Transportträgern 5 dienen, beispielsweise wenn eine vorrangige Bearbeitung einer bestimmten Linse 2 oder mehrerer bestimmter Linsen 2 erfolgen soll.

Vorzugsweise können die Linsen 2 bzw. Transportträger 5 mittels der Transfereinrichtungen 9 zwischen den Spuren H und N wechseln. Insbesondere ist ein solcher Wechsel zwischen jeder der Bearbeitungseinrichtungen 3 und/oder mittels jeder Transfereinrichtung 9 und/oder in jede Richtung, also von der Hauptspur H zur Nebenspur N und umgekehrt, möglich.

Die Anlage 1 bzw. das Transfersystem 4 weist vorzugsweise Wechseleinrichtungen 11 zum Ändern des Verlaufs der Spuren H und/oder N bzw. der Förderrichtung F auf, wie in Fig. 1 angedeutet. Die Wechseleinrichtungen 11 dienen also insbesondere einem Umlenken der Transportträger 5, um nach einer Reihe R von Bearbeitungseinrichtungen 3 bzw. einem insbesondere geradem Abschnitt der Hauptspur H die Transportträger 5 anschließend an einen weiteren bzw. anderen Abschnitt der Hauptspur H, hier besonders bevorzugt einem gegenüberliegenden Abschnitt mit entsprechend entgegengesetzter Förderrichtung F weiter zu fördern. So kann insbesondere eine abgewinkelte, U-förmige oder kreisförmige bzw. ringförmige Förderung bzw. Kreisförderung K zu ermöglichen. Insbesondere umfassen die Wechseleinrichtungen 11 entsprechende Umlenkeinrichtungen, um die Transportträger 5 drehen und nicht nur, wie die Transfereinrichtungen 9, verschieben zu können.

Vorzugsweise sind Wechseleinrichtungen 11 im Bereich des Anfangs und des Endes der Hauptspur H und/oder Nebenspur N bei einer Reihe R von Bearbeitungseinrichtungen 3 angeordnet, insbesondere um einen Kreislauf bzw. eine Zirkulation oder Kreisförderung K von Linsen 2 bzw. Transportträgern 5 zu ermöglichen, wie in Fig. 1 angedeutet.

Die Anlage 1 bzw. das Transfersystem 4 weist vorzugsweise eine Transfersteuerung bzw. Steuereinrichtung 12 - insbesondere eine speicherprogrammierbare Steuerung oder HMI (Mensch-Maschine-Schnittstelle) - zur Steuerung der Transfereinrichtungen 9 und/oder Fördereinrichtungen 10 sowie, sofern vorhanden, der Wechseleinrichtungen 11 und optional der Aufnahme 7 und/oder Abgabe 6 auf, wie in Fig. 1 angedeutet. Der Anschluss erfolgt besonders bevorzugt über ein Bussystem 13, das in Fig. 1 gestrichelt angedeutet ist. Insbesondere erfolgt über das Bussystem 13 die Energieversorgung und/oder Steuerung. Besonders bevorzugt weist das Bussystem 13 ein alle Versorgungsleitungen und/oder Steuerleitungen enthaltendes Buskabel auf.

Bei einer Erweiterung der Anlage 1 können weitere Komponenten, wie Transfereinrichtungen 9, Fördereinrichtungen 10 oder Wechseleinrichtungen 11, einfach direkt an das Bussystem 13 bzw. Buskabel angeschlossen werden. Dementsprechend ist ein Ausbau der Anlage 1 bzw. des Transfersystems 4, ggfs. auch ein Umbau, sehr einfach möglich.

Vorzugsweise erfolgt also eine gemeinsame bzw. zentrale Steuerung des Transfersystems 4. Die den Bearbeitungseinrichtungen 3 zugeordneten Fördereinrichtungen 8 bilden vorzugsweise jedoch keinen Teil des Transfersystems 4 bzw. der Transfersteuerung. Stattdessen werden die Fördereinrichtungen 8 der Bearbeitungseinrichtungen 3 vorzugsweise von den Bearbeitungseinrichtungen 3 selbst bzw. direkt oder von deren Maschinensteuerungen 17 gesteuert. Die Fördereinrichtungen 8 sind dementsprechend vorzugsweise jeweils an die zugeordnete Bearbeitungseinrichtung 3 bzw. deren Maschinensteuerung 17 zur Steuerung der jeweiligen Fördereinrichtung 8 angeschlossen.

Fig. 2 zeigt in einer schematischen Draufsicht eine bevorzugte Ausführungsform eines Transportträgers 5 zur Aufnahme von mindestens einer, beim Darstellungsbeispiel insbesondere zwei oder mehr zu bearbeitenden Linsen 2. Bei der Linsenbearbeitung bzw. Brillenglasbearbeitung werden üblicherweise zwei zu bearbeitende Linsen 2 bzw. ein Linsenpaar von einem Transportträger 5 aufgenommen. Dies ist auch hier bevorzugt. Insbesondere weist der Transportträger 5 zwei Aufnahmeplätze, beispielsweise in Form von Vertiefungen, für zwei Linsen 2 auf.

Der Transportträger 5 weist vorzugsweise eine Kodierung 5A, beispielsweise einen Barcode oder dgl., mit wichtigen Bearbeitungsdaten, Daten zur Identifikation und/oder sonstigen Informationen für beide Linsen 2 oder für jede Linse 2 eine separate Kodierung 5A, wie in Fig. 2 angedeutet, auf. Die Kodierung 5A kann auch an einer anderen Seite oder Querseite des Transportträgers 5 angebracht sein.

Besonders bevorzugt enthält die Kodierung 5A eine Identifikation oder Auftragsnummer oder dergleichen für die jeweilige Linse(n) 2, so dass mittels der Identifikation bzw. Auftragsnummer ein Bearbeitungsplan und/oder Bearbeitungsstatus bzw. erforderliche Bearbeitungsschritte, Bearbeitungsreihenfolgen, Bearbeitungsdaten und/oder sonstige Informationen, beispielsweise über ein entsprechendes Serversystem, Datenbanksystem oder dergleichen, insbesondere eine Systemsteuerung 20, wie in Fig. 1 angedeutet, bestimmbar oder davon abrufbar sind.

Vorzugsweise ist der Abstand der Linsen 2 in einem Transportträger 5 genauso groß wie der Abstand einer Linse 2 in einem Transportträger 5 zu der benachbarten Linse 2 in einem unmittelbar benachbarten Transportträger 5. Dies vereinfacht die Handhabung bzw. Positionierung, insbesondere in den Bearbeitungseinrichtungen 3. Dieser Abstand beträgt bei Darstellungsbeispiel vorzugsweise 130 mm. Die Länge der Transportträger 5 beträgt vorzugsweise das Doppelte, also hier 260 mm.

Der Transportträger 5 ist beim Darstellungsbeispiel vorzugsweise oben offen, kistenartig und/oder in der Draufsicht zumindest im Wesentlichen quadratisch ausgebildet.

Der Transportträger 5 weist beim Darstellungsbeispiel vorzugsweise zusätzliche Lager- oder Aufnahmeplätze, beispielsweise für ein Werkzeug oder Brillengestell, auf, wie in Fig. 2 gestrichelt angedeutet.

Anstelle des hier beschriebenen, vorzugsweise kisten- oder kastenförmigen Transportträgers 5 kann jedoch auch ein sonstiger Halter für eine Linse 2 oder mehrere Linsen 2 eingesetzt werden.

Generell ist anzumerken, dass auch eine blockstückfreie Bearbeitung erfolgen kann. Beim Darstellungsbeispiel wird jedoch bevorzugt oder zumindest derzeit noch die jeweilige Linse 2 temporär mit einem zugeordneten Halter bzw. Blockstück (nicht dargestellt) verbunden. Mittels dieses Halters bzw. Blockstücks wird die jeweilige Linse 2 dann vorzugsweise bei weiteren Bearbeitungen bzw. in anderen Bearbeitungseinrichtungen 3, insbesondere bei der formgebenden Bearbeitung und/oder beim Polieren, jeweils gehalten bzw. positioniert.

Fig. 3 zeigt in einer schematischen Darstellung bzw. Vergrößerung von Fig. 1 einen bevorzugten Aufbau einer Transfereinrichtung 9. Die Transfereinrichtung 9 weist vorzugsweise eine (erste) Fördereinrichtung 14 zur Längsförderung (Förderung in Richtung F einer der Transportspuren, insbesondere entlang der Nebenspur N und eine (zweite) Fördereinrichtung 15 zur Querförderung (Förderung quer oder senkrecht zu der Förderrichtung F bzw. dem Transportspuren) bzw. zum Spurwechsel auf.

Die Fördereinrichtungen 14 und 15 sind vorzugsweise ebenso wie die Fördereinrichtungen 8 und/oder 10 als Band- oder Gurtförderer ausgebildet.

Beim Darstellungsbeispiel weisen die Fördereinrichtungen 10 vorzugsweise Bänder oder Gurte 10A und zugeordnete Antriebe 10B auf. Die Fördereinrichtungen 14 weisen vorzugsweise jeweils Bänder oder Gurte 14A und zugeordnete Antriebe 14B auf. Die Fördereinrichtungen 15 weisen vorzugsweise Bänder oder Gurte 15A und zugeordnete Antriebe 15B auf.

Mittels der durch den zugeordneten Antrieb 10B, 14B oder 15B antreibbaren Bänder bzw. Gurte 10A, 14A, 15A sind darauf aufliegende Linsen 2 bzw. Transportträger 5 linear in die Förderrichtung F bzw. bei der Querförderung quer dazu förderbar.

Die Fördereinrichtung 15 zur Querförderung weist, wie in Fig. 3 angedeutet, bei der Transfereinrichtung 9 gemäß dem Darstellungsbeispiel vorzugsweise einen Zwischenförderer mit Bändern oder Gurten 15D zwischen den beiden Transportspuren H und N bzw. zwischen der Fördereinrichtung 14 und der benachbarten Fördereinrichtung 10 auf.

Die Fördereinrichtung 15 weist vorzugsweise mindestens einen Antrieb 15B zum Antrieb der Bänder bzw. Gurte 15A und, sofern vorhanden, 15D, auf.

Die Bänder bzw. Gurte 15A sind vorzugsweise paarweise zwischen den Gurten 14A der Fördereinrichtung 14 und den Gurten 10A der Fördereinrichtung 10 angeordnet und vorzugsweise mittels einer zugeordneten Hubeinrichtung (nicht dargestellt) bedarfsweise anhebbar und absenkbar. Vorzugsweise sind die Bänder bzw. Gurte 15A paarweise jeweils von einem Hubelement, insbesondere einem Hubtisch 15C, getragen. Das Hubelement bzw. der Hubtisch 15C bzw. die Hubelemente/Hubtische 15C und damit die zugeordneten Bänder oder Gurte 15A sind bedarfsweise anhebbar und absenkbar, um die Querförderung zu ermöglichen. Jedoch sind auch andere konstruktive Lösungen möglich.

Die Transfereinrichtung 9 ist vorzugsweise zur Aufnahme und temporären Lagerung bzw. Speicherung mindestens einer Linse 2 oder eines Transportträgers 5 - insbesondere zwischen benachbarten Bearbeitungseinrichtungen 3 bzw. deren Fördereinrichtungen 8 - ausgebildet und weist hierzu insbesondere einen Lager- bzw. Aufnahmebereich 19 auf, wie in Fig. 3 gestrichelt angedeutet. Dies bzw. dieser wird beim Darstellungsbeispiel vorzugsweise durch die Fördereinrichtung 14 gebildet, die eine hierfür ausreichende Länge aufweist. Jedoch sind auch andere konstruktive Lösungen möglich.

Insbesondere beträgt die Länge der Fördereinrichtung 14 mindestens die einfache Länge eines Transportträgers 5, beim Darstellungsbeispiel sogar mindestens die doppelte Länge des Transportträgers 5, um diesen vorzugsweise neben oder in Förderrichtung F vor bzw. stromauf und/oder danach bzw. stromab der Fördereinrichtung 15 zur Querförderung bzw. deren Hubtisch 15C aufnehmen bzw. zwischenlagern zu können. Hierzu ist dem Aufnahmebereich 19 vorzugsweise eine geeignete Stoppeinrichtung 18 (beispielsweise mit einem in den Bewegungsweg des Transportträgers 5 bewegbaren oder klappbaren Anschlag bzw. einem Vereinzler) zum bedarfsweisen Anhalten des oder eines Transportträgers 5 in dem Aufnahmebereich 19 zugeordnet. Die Stoppeinrichtung 18 kann einen Transportträger 5 - hier in dem Aufnahmebereich 19 - insbesondere auch bei weiterlaufender Fördereinrichtung 14 anhalten bzw. stoppen.

Vorzugsweise weist die Anlage 1 bzw. Transfereinrichtung 9 mindestens zwei Aufnahmebereiche 19 zur Aufnahme von dementsprechend mindestens zwei Transportträgern 5, insbesondere separat von der Hauptspur H, und/oder zwischen zwei benachbarten Bearbeitungseinrichtungen 3 bzw. auf der Nebenspur N auf, um die Transportträger 5 temporär parken bzw. zwischenspeichern zu können.

Besonders bevorzugt weist die Anlage 1 bzw. Transfereinrichtung 9 stromauf und stromab der Querfördereinrichtung 15 jeweils mindestens einen Aufnahmebereich 19 - insbesondere in der Nebenspur N - auf oder bildet diese Aufnahmebereiche19, wie in Fig. 1 und 3 angedeutet.

Alternativ oder zusätzlich weist die Anlage 1 bzw. Transfereinrichtung 9 vorzugsweise mindestens zwei Aufnahmebereiche 19 stromab der Querfördereinrichtung 15 auf der Nebenspur N bzw. vor einer nachfolgenden Bearbeitungseinrichtung 3 für dementsprechend mindestens zwei Transportträger 5 auf, wie in Fig. 1 und 3 angedeutet.

Besonders bevorzugt sind die Aufnahmebereiche 19 vor und/oder nach der Querfördereinrichtung 15 von insbesondere derselben Längsfördereinrichtung 14 gebildet, wie in Fig. 3 angedeutet. Jedoch sind auch andere konstruktive Lösungen möglich.

Alternativ oder zusätzlich bildet die Anlage 1 bzw. Transfereinrichtung 9 bzw. Querfördereinrichtung 15 mindestens einen Aufnahmebereich 19 zwischen den beiden Transportspuren H und N zur Aufnahme eines Transportträgers 5. Dieser Aufnahmebereich ist insbesondere auf einem Querförderer bzw. Zwischenförderer zwischen den beiden Spuren H und N bzw. zwischen benachbarten Fördereinrichtungen 10 und 14 gebildet. Jedoch sind auch andere konstruktive Lösungen möglich.

Vorzugsweise entspricht die Länge der Längsfördereinrichtung 14 einer zwischen zwei benachbarten Bearbeitungseinrichtung 3 angeordneten Transfereinrichtung 9 besonders bevorzugt mindestens dem dreifachen der Länge des Transportträgers 5, so dass ausreichend Platz einerseits für die Querförderung und andererseits für mindestens zwei Aufnahmebereiche 19 vorhanden ist. Jedoch können die Aufnahmebereiche 19 auch, wie bereits angedeutet, von verschiedenen Fördereinrichtungen gebildet sein.

**In** diesem Zusammenhang ist anzumerken, dass vorzugsweise generell ein Stoppen oder Anhalten der Transportträger 5 mittels entsprechender oder ähnlicher Stoppeinrichtungen 18 (wie beispielhaft auch in der in Fig. 3 dargestellt) an den gewünschten Stellen oder Positionen des Transfersystems 4 und/oder der Fördereinrichtungen 8 erfolgt, um die Transportträger 5 individuell bzw. genau, insbesondere an gewünschten bzw. definierten Positionen, ggf. auch bei weiterlaufenden Fördereinrichtungen 8, 10, 14 und/oder ggf. 15 bzw. Bändern oder Gurten anhalten zu können.

Insbesondere können also mittels Stoppeinrichtungen 18 oder sonstigen Einrichtungen auch Transportträger 5 auf der Hauptspur bedarfsweise angehalten bzw. gestoppt werden. Hierbei können mittels einer Stoppeinrichtung 18 auch gleichzeitig mehrere hintereinander ankommende Transportträger 5 angehalten werden. Wesentlich ist dann, wieder eine Vereinzelung möglich ist, so dass die Transportträger 5 entsprechend auch wieder individuell einzelnen Bearbeitungseinrichtungen 3 zugefördert werden können.

Vorzugsweise weist die Anlage 1 bzw. das Transfersystem 4 oder die jeweilige Fördereinrichtung 8, 10, 14, 15, Transfereinrichtung 9 und/oder Wechseleinrichtung 11 - insbesondere zusätzlich zu den Stoppeinrichtungen 18 geeignete Sensoren 16, wie Lichtschranken, Barcode-Leser o.dgl., auf, insbesondere um das Vorhandensein von Linsen 2 oder Transportträgern 5 bzw. deren Position erfassen und/oder die Transportträger 5 richtig positionieren und/oder die Linsen 2 bzw. Transportträger 5 erfassen oder identifizieren, besonders bevorzugt die Kodierungen 5A lesen zu können.

Beim Darstellungsbeispiel entspricht die Länge der Fördereinrichtung 14 bzw. der Transfereinrichtung 9 in Förderrichtung F zumindest im Wesentlichen dem Abstand benachbarter Bearbeitungseinrichtungen 3 bzw. benachbarter Fördereinrichtungen 8 bzw. der Gangbreite zwischen benachbarter Bearbeitungseinrichtungen 3, wie bereits erwähnt, bzw. mindestens der Länge von zwei oder drei Transportträgern 5.

Es ist anzumerken, dass die Bearbeitungseinrichtungen 3 vorzugsweise generell zumindest mit im wesentlichen gleichem Zwischenabstand aufgestellt werden. Dementsprechend können vorzugsweise baugleiche Transfereinrichtungen 9 dazwischen eingesetzt oder angeordnet werden.

Im Betrieb kann die Anlage 1 bzw. Fördereinrichtung 14 einen Transportträger 5 von einer vorgeordneten Bearbeitungseinrichtung 3 aufnehmen und temporär speichern bzw. lagern, insbesondere in dem Aufnahmebereich 19 in der Nebenspur N bzw. am Ausgang der Bearbeitungseinrichtung 3.

Bei Bedarf kann die Transfereinrichtung 9 bzw. deren Fördereinrichtung 14 den Transportträger 5 an die nachgeordnete Bearbeitungseinrichtung 3 weiter fördern bzw. wieder abgeben. Alternativ kann die Transfereinrichtung 9 bzw. deren Fördereinrichtung 15 den Transportträger 5 zu der Hauptspur H wechseln, also querfördern. In diesem Fall wird der Hubtisch 15C angehoben bis der Transportträger 5 (in Fig. 3 nicht dargestellt) angehoben und von den Bändern bzw. Gurten 14A der Fördereinrichtung 14 abgehoben wird. Anschließend wird der Transportträger 5 mittels der Bänder bzw. Gurte 15A - beim Darstellungsbeispiel über den optionalen Zwischenförderer bzw. die Bänder bzw. Gurte 15D - zu der zweiten Transportspur T2 bzw. auf die dortigen Bänder bzw. Gurte 15A gefördert. Vorzugsweise wird für die Querförderung auch der Hubtisch 15C in der Transportspur T2 bzw. in der Fördereinrichtung 10 mit bzw. gleichartig angehoben. Ein bevorzugter seitlicher Anschlag 15E, der über die Fördereinrichtung 10 bzw. deren Bänder bzw. Gurte 10A seitlich nach oben vorragt, verhindert, dass der Transportträger 5 in Querrichtung zu weit gefördert wird bzw. das der Transportträger 5 über die Fördereinrichtung 10 seitlich hinaus gefördert wird.

Anschließend wird die Fördereinrichtung 15 bzw. werden deren Hubtische 15C wieder abgesenkt und damit der Transportträger 5 an die Fördereinrichtung 10 übergegeben bzw. auf deren Bänder bzw. Gurte 10A abgelegt, so dass nun eine Förderung entlang der zweiten Transportspur T2 mittels der Fördereinrichtung 10 erfolgen kann.

Beim Darstellungsbeispiel ist die Fördereinrichtung 15 zur Querförderung in die Fördereinrichtung 10 zur Längsförderung integriert, da keine separate Fördereinrichtung für die Längsförderung der Transfereinrichtung 9 in der Hauptspur H vorgesehen ist, im Gegensatz zu der Fördereinrichtung 14 zur Längsförderung der Transfereinrichtung 9 in der Nebenspur N. Jedoch kann grundsätzlich auch eine solche zusätzliche Fördereinrichtung 14 der Transfereinrichtung 9 in der Hauptspur H vorgesehen sein.

Die Transfereinrichtung 9 kann nicht nur für einen Wechsel des Transportträgers 5 von der Nebenspur N in die Hauptspur H, sondern natürlich auch für den umgekehrten Wechsel, insbesondere zum Einschleusen einer Linse 2 oder eines Transportträgers 5 in die Nebenspur N für die Bearbeitung in einer nachfolgenden Bearbeitungseinrichtung 3, verwendet werden.

In diesem Fall wird der Transportträger 5 in der Hauptspur H zunächst der zugeordneten Fördereinrichtung 10 über der Fördereinrichtung 15 zur Querförderung bzw. deren Hubtisch 15C in der Hauptspur H positioniert. Die Positionierung erfolgt vorzugsweise mittels einer Stoppeinrichtung 18, beispielsweise mittels der gestrichelt dargestellten Stoppeinrichtung 18, die insbesondere in der Hauptspur H bzw. nach dem Hubtisch 15C angeordnet ist.

Anschließend kann das Anheben der Transporttische 15C und die Querförderung zu der Nebenspur N durch entsprechenden Antrieb der Bänder bzw. Gurte 15A und 15D mittels des Antriebs 15B erfolgen, bis der Transportträger 5 auf der Fördereinrichtung 14 positioniert ist, wobei der in der Nebenspur N vor- und/oder nachgeordnete Aufnahmebereich 19 auch von einem andere Transportträger 5 belegt sein kann, da der Aufnahmebereich 19 vorzugsweise neben oder insbesondere stromab oder stromauf der Fördereinrichtung 15 angeordnet ist. Die Positionierung des quer geförderten Transportträgers 5 in der Nebenspur N kann wiederum durch einen optionalen seitlichen Anschlag 15E erleichtert oder festgelegt werden.

Die Transfereinrichtung 9 dient vorzugsweise sowohl einem Einschleusen von Linsen 2 bzw. Transportträgern 5 in die Hauptspur H als auch einem Ausschleusen von Linsen 2 bzw. Transportträgern 5 aus der Hauptspur H in eine andere Transportspur, hier die Nebenspur N.

Die Transfereinrichtung 9 ist insbesondere derart ausgebildet, dass eine Linse 2 bzw. ein Transportträger 5 quergefördert bzw. in die Nebenspur N eingeschleust werden kann, während eine andere Linse 2 bzw. ein anderer Transportträger 5 sich im Aufnahmebereich 19 befindet bzw. dort zwischengelagert oder zwischengespeichert ist. So können Linsen 2 bzw. Transportträger 5 auch zwischen andere Linsen 2 bzw. Transportträger 5 in der Nebenspur N eingeschleust werden.

Gemäß einem besonders bevorzugten Aspekt der vorliegenden Erfindung ist die Anlage 1 bzw. Transfereinrichtung 9 vorzugsweise derart ausgebildet und/oder wird vorzugsweise derart betrieben, dass ein Transportträger 5 ausgehend von der Hauptspur H bereits dann quergefördert wird, wenn ein zuvor von derselben Transfereinrichtung 9 bereits quergeförderter Transportträger 5 die Nebenspur N bzw. die Fördereinrichtung 14 erreicht hat und/oder wenn der Zwischenförderer bzw. der potentielle Aufnahmebereich 19 zwischen den beiden Spuren H und N freigefahren ist. Dies ermöglicht eine wesentliche Verkürzung der Wartezeiten, insbesondere für in der Hauptspur H nachfolgende Transportträger 5.

Vorzugsweise ist die Anlage 1 bzw. Transfereinrichtung 9 mit einem oder mehreren entsprechenden Sensoren 16 am Zwischenförderer bzw. im Bereich der Gurte 15D versehen, um zu erkennen, ob dort der Aufnahmebereich 19 belegt oder frei ist.

Weiter gestattet die Transfereinrichtung 9, wie bereits angesprochen, ein wahlweises Weiterfördern einer Linse 2 bzw. eines Transportträgers 5 von der vorherigen Bearbeitungseinrichtung 3 (in der Nebenspur N) bzw. aus einem Aufnahmebereich 19 zu der nächsten Bearbeitungseinrichtung 3 als auch ein Ausschleusen bzw. Querfördern von der Nebenspur N zu einer anderen Transportspur, hier der Hauptspur H. Insbesondere bildet die Transfereinrichtung 9 also eine Weiche, mit insbesondere vor- und/oder nachgeordnetem Aufnahmebereich 19 und/oder einem zwischen den Spuren H und N zugeordneten, also dazwischen liegenden Aufnahmebereich 19 zur Zwischenspeicherung.

Umgekehrt kann die Anlage 1 bzw. Transfereinrichtung 9 beim Wechseln von der Nebenspur N zu der Hauptspur H auch derart eingesetzt werden, dass ein Transportträger 5 in dem stromauf gelegenen Aufnahmebereich 19 und/oder im Bereich der Querfördereinrichtung 15 in der Nebenspur N und/oder in dem dazwischenliegenden Aufnahmebereich 19 zwischengespeichert wird, bis ein Einschleusen in die Hauptspur H erfolgt. So können auch mehrere Transportträger 5 zwischengespeichert werden. Alternativ oder zusätzlich kann so auch erreicht werden, dass Transportträger 5 auf der Hauptspur H unmittelbar nacheinander folgen, die anschließend derselben Bearbeitungseinrichtung 3 zugefördert werden. So kann ebenfalls eine überraschend deutliche Verringerung von Wartezeiten erreicht werden.

Da die Transfereinrichtung 9 vorzugsweise auch zum bereits genannten Einschleusen von Linsen 2 bzw. Transportträgern 5 in die Nebenspur N ausgebildet ist, bildet die Transfereinrichtung 9 insbesondere eine universell einsetzbare Weiche, die ausgehend von der Förderrichtung F ein Abzweigen zur Querförderung zur Ausschleusung als auch ein Einschleusen insbesondere über die gleiche Querförderung bei entgegengesetzter Richtung und zur Weiterförderung in der Förderrichtung F ermöglicht. So wird ein sehr kompakter Aufbau bei universeller Einsetzbarkeit ermöglicht.

Anzumerken ist noch, dass das Transfersystem 4 bzw. die Anlage 1 oder Hauptspule H vorzugsweise ein Anhalten von Linsen 2 bzw. Transportträgern 5 vor der Querförderung der Transfereinrichtung 9, insbesondere zur Ausschleusung aus der Hauptspur H, beispielsweise jeweils in einem vorgeordneten Stoppbereich 24, wie gestrichelt in Fig. 3 angedeutet, insbesondere mittels einer zugeordneten Stoppeinrichtung 18 o. dgl., ermöglicht, so dass ein ungestörtes Ausschleusen von Linsen 2 bzw. Transportträgern 5 aus der Hauptspur H erfolgen kann.

Vorzugsweise ist dem Stoppbereich 22 ein Sensor 16 zur Erfassung bzw. Identifizierung von Linsen 2 bzw. Transportträgern 5 im Stoppbereich 22 zugeordnet.

Vorzugsweise sind Sensoren 16 auch den Hubtischen 15C zugeordnet bzw. im Bereich der Fördereinrichtung 15 jeweils bei den Spuren H und/oder N und/oder im Bereich des Quer- bzw. Zwischenförderes (Gurte 15D) angeordnet bzw. vorgesehen, um dort Linsen 2 bzw. Transportträger 5 erfassen bzw. identifizieren zu können und/oder um festzustellen, ob diese Bereiche freigefahren sind.

Vorzugsweise ist mindestens ein Sensor 16, der einer Transfereinrichtung 9 und/oder dem Aufnahmebereich 19 und/oder dem Stoppbereich 22 zugeordnet ist, der nachgeordneten Bearbeitungseinrichtung 3 zugeordnet, so dass über diesen Sensor 16 bzw. diese Sensoren 16 ankommende Linsen 2 bzw. Transportträger 5 erfassbar und vorzugsweise identifizierbar sind, um für die Bearbeitung in der zugeordneten Bearbeitungseinrichtung 3 geeignete Linsen 2 - insbesondere unter Rückgriff auf den oder Berücksichtigung von Bearbeitungsplan und Bearbeitungsstatus der jeweiligen Linse 2 - erkennen und bedarfsweise anfordern zu können.

Die Anlage 1 weist vorzugsweise eine zentrale Anlagen- bzw. Systemsteuerung 20 auf. An diese sind vorzugsweise einzelne, mehrere oder alle Bearbeitungseinrichtungen 3 oder deren Maschinensteuerungen 20, beispielsweise über ein Datennetzwerk, das Bussystem 13 und/oder ein (weiteres) System, eine Ethernet-Verkabelung oder dergleichen, angeschlossen. Vorzugsweise ist bzw. sind die Transfereinrichtung 4 bzw. Steuereinrichtung 12, insbesondere über das Bussystem 13, und/oder die Sensoren 16 oder dergleichen an die Systemsteuerung 20 angeschlossen, wie in Fig. 1 angedeutet.

Gemäß einem besonders bevorzugten Aspekt zeichnet sich das bevorzugte Verfahren dadurch aus und/oder ist die Anlage 1 bzw. Systemsteuerung 20 derart ausgebildet, dass ein Paar oder Gruppe G von zwei oder mehr Transportträgern 5 mit Linsen 2 für eine Bearbeitung in derselben Bearbeitungseinrichtung 3 unmittelbar nacheinander über dieselbe Transfereinrichtung 9 zu derselben Bearbeitungseinrichtung 3 gefördert werden. Insbesondere werden die zwei Transportträger 5 unmittelbar nacheinander auf der Hauptspur H derselben Transfereinrichtung 9 zugefördert. Diese bevorzugte Paar- oder Gruppenbildung wird auch als gruppenweises Routing bezeichnet.

Besonders bevorzugt wird zur Bildung der Gruppe G von zwei oder mehr Transportträgern 5 bzw. zum gruppenweisen Routing zunächst einer der Transportträger 5 in einem Aufnahmebereich 19 - insbesondere am Ausgang einer vorherigen Bearbeitungseinrichtung 3 - zwischengespeichert, bis dieser Transportträger 5 unmittelbar hinter oder vor den anderen Transportträger 5 auf die Hauptspur H eingeschleust werden kann.

Alternativ oder zusätzlich werden zum gruppenweisen Routing einzelne Transportträger 5 zirkuliert, bis die gewünschte Gruppe G von zwei oder mehr Transportträgern 5 gebildet werden kann, die unmittelbar nacheinander über dieselbe Transfereinrichtung 3 derselben Bearbeitungseinrichtung 3 zugefördert werden.

Alternativ oder zusätzlich werden zum gruppenweisen Routing einzelne, mehrere oder alle Transportträger 5 einer Gruppe G optional in einer Bearbeitungseinrichtung 3 bzw. einer Speichereinrichtung 21, wie einem Stacker, Bandbereich und/oder dergleichen, der Anlage 1 bzw. des Transfersystems 4 zwischengespeichert.

Die Speichereinrichtung 21 ist vorzugsweise an das Transfersystem 4, die Hauptspur H und/oder Nebenspur N, wie bspw. gestrichelt in Fig. 1 angedeutet, angeschlossen.

Der Speichereinrichtung 21 kann ergänzend oder unabhängig auch dazu benutzt werden, um eine Gruppe G zwischenzuspeichern, bis diese an eine nachfolgende Bearbeitung, Bearbeitungseinrichtung 3, eine Abgabe 6 oder andere bzw. nachfolgende Anlage abgegeben bzw. weitergefördert wird.

Die vorschlagsgemäße Anlage 1 bzw. deren Verwendung und das vorgeschlagene Verfahren gestatten eine optimierte Bearbeitung und Ausnutzung der oft unterschiedlichen Bearbeitungskapazitäten der verschiedenen Bearbeitungseinrichtungen 3, wobei Wartezeiten bei der Zu- und Wegförderung der Linsen 2 bzw. Transportträger 5 deutlich minimiert und so der Durchsatz überraschend deutlich erhöht werden konnte.

Eine unabhängige bzw. allgemeinere Idee der vorliegenden Erfindung zur Optimierung des Durchsatzes der Anlage 1 und/oder bei einer nachfolgenden Bearbeitung liegt insbesondere darin bzw. in der Verwendung der Anlage 1, um eine Gruppe G von zwei oder mehr Transportträgern 5 zu bilden, wobei die Transportträger 5 dieser Gruppe G zwischengespeichert und/oder unmittelbar nacheinander von einem Transfersystem 4 bzw. einer Transfereinrichtung 9 insbesondere derselben Bearbeitungseinrichtung 3 zugefördert oder an eine nachgeordnete Bearbeitung weitergefördert werden. Besonders bevorzugt werden die Transportträger 5 für die Gruppe G derart ausgewählt, dass deren Linsen 2 derselben oder einer gleichartigen Bearbeitung bedürfen und/oder deren Linsen 2 - insbesondere hinsichtlich Material, Krümmung, Größe und/oder Dicke - gleichartig sind.

Unabhängige Ansprüche gemäß einem bevorzugten allgemeinen Aspekt der vorliegenden Erfindung betreffen ein Verfahren und eine Anlage 1, wobei zur Optimierung des Durchsatzes der Anlage 1 und/oder bei einer nachfolgenden Bearbeitung eine Gruppe G von zwei oder mehr Transportträgern 5 mit zu bearbeitenden Linsen 2 gebildet wird bzw. gruppenweises Routing erfolgt, wobei die Transportträger 5 dieser Gruppe G - insbesondere durch Zirkulation bzw. Kreisförderung K und/oder in einer Speichereinrichtung 21 - zwischengespeichert und/oder unmittelbar nacheinander von einem Transfersystem 4 bzw. einer Transfereinrichtung 9 der Anlage 1 insbesondere derselben Bearbeitungseinrichtung 3 der Anlage 1 zugefördert oder an eine nachgeordnete Bearbeitung weitergefördert werden.

Dieser allgemeine Aspekt und die diesbezüglichen Ansprüche können mit den weiteren, vorher genannten Merkmalen und Aspekten des Routing bzw. der Gruppenbildung und/oder der vorher beschriebenen Verfahren und Anlage 1 kombiniert werden und Unteransprüche bilden.

Gemäß einem weiteren, besonders bevorzugten Aspekt zeichnet sich das bevorzugte Verfahren dadurch aus und/oder ist die Anlage 1 bzw. Systemsteuerung 20 derart ausgebildet, dass die Querförderung eines Transportträgers 5 mittels einer Transfereinrichtung 9 zur Optimierung des Durchsatzes der Anlage 1 bereits dann beginnt, wenn ein zuvor von derselben Transfereinrichtung 9 quergeförderter Transportträger 5 den Zwischenförderer bzw. Zwischenbereich Z zwischen den Spuren **H,** N verlassen und/oder die andere Spur H bzw. N erreicht hat.

Besonders bevorzugt ist die Kombination der vorgenannten Optimierung der Querförderung mit dem gruppenweisen Routing. Insbesondere ist also vorgesehen, dass eine Gruppe G von zwei oder mehr Transportträgern 5 mit Linsen 2 für eine Bearbeitung in derselben Bearbeitungseinrichtung 3 unmittelbar nacheinander über dieselbe Transfereinrichtung 3 dieser Bearbeitungseinrichtung 3 bzw. deren Fördereinrichtung 8 zugefördert wird und die Querförderung des zweiten Transportträgers 5 bereits dann beginnt, wenn der erste Transportträger 5 den Zwischenbereich Z der Transfereinrichtung 9 zwischen den Spuren H, N verlassen und/oder die andere Spur H, N erreicht hat. So lassen sich die Wartezeiten bei der Zu- und Wegförderung der Linsen 2 bzw. Transportträger 5 deutlich verringern und der Durchsatz überraschend deutlich erhöhen.

Vorzugsweise wird durch den vorgezogenen Beginn der Querförderung die Hauptspur H für nachfolgende Transportträger 5 bzw. Linsen 2 wieder schneller freigegeben, also Wartezeiten minimiert.

Insbesondere wird der zweite Transportträger zunächst in den Zwischenbereich Z der Transfereinrichtung 9 gefördert und die Hauptspur H wieder freigegeben.

Vorzugweise werden die zwei Transportträger 5 unmittelbar nacheinander über dieselbe Transfereinrichtung 9 derselben Bearbeitungseinrichtung 3 oder Fördereinrichtung 8 erst dann zugefördert, wenn mindestens zwei Aufnahmebereiche 19 für die beiden Transportträger 5 vor oder stromauf dieser Bearbeitungseinrichtung 3 bzw. Fördereinrichtung 8 frei sind.

Die vorschlagsgemäße Anlage 1 und das vorgeschlagene Verfahren gestatten eine optimierte Bearbeitung und Ausnutzung der oft unterschiedlichen Bearbeitungskapazitäten der verschiedenen Bearbeitungseinrichtungen 3, wobei Wartezeiten bei der Zu- und Wegförderung der Linsen 2 bzw. Transportträger 5 deutlich minimiert und so der Durchsatz überraschend deutlich erhöht werden konnte.

Wie bereits erwähnt erfolgt vorzugsweise eine Zirkulation bzw. Kreisförderung K der Linsen 2 bzw. Transportträger 5. Dies kann insbesondere eine Speicherung von Linsen 2 bzw. Transportträgern 5 ermöglichen und/oder dem gruppenweisen Routing dienen.

Bei der Zirkulation bzw. Kreisförderung K können auch mehrere Transportträger 5 zirkulieren bzw. in einem Kreislauf gefördert werden, beispielsweise so lange bis die nächste oder eine gewünschte Bearbeitungseinrichtung 3 zur Aufnahme bzw. Zuförderung für die passende Bearbeitung bereit und oder das gruppenweise Routing erfolgt ist.

Die Systemsteuerung 20 verwaltet insbesondere die von der Anlage 1 abzuarbeitenden Aufträge bzw. die von der Anlage 1 zu bearbeitenden Linsen 2 bzw. die für die Bearbeitung erforderlichen Informationen, beispielsweise Bearbeitungsdaten, Bearbeitungspläne bzw. Bearbeitungsreihenfolgen, Bearbeitungsstati, geplante oder erforderliche Bearbeitungsschritte, optische und/oder geometrische Informationen oder Daten der Linsen 2 und/oder sonstige Informationen, beispielsweise über einzusetzende oder verfügbare Werkzeuge o. dgl. Diese Informationen werden insbesondere für das gruppenweise Routing eingesetzt.

Nach dem Freifahren einer Bearbeitungseinrichtung 3 bzw. deren Fördereinrichtung 8 kann diese wieder die nächste Linse 2 bzw. den nächsten Transportträger 5 aufnehmen. Die Zuförderung erfolgt insbesondere über das Transfersystem 4 bzw. die vorgeordnete Transfereinrichtung 9. Die Auslösung der Zuförderung erfolgt vorzugsweise durch eine Anforderung der jeweiligen Bearbeitungseinrichtung 3 oder durch die Systemsteuerung 20, wenn diese erkannt bzw. mitgeteilt bekommen hat, dass die Bearbeitungseinrichtung 3 bzw. deren Fördereinrichtung 8 freigefahren worden ist.

Es ist anzumerken, dass die Fördereinrichtungen 8 der Bearbeitungseinrichtungen 3 insbesondere auch mehrere Linsen 2 bzw. Transportträger 5 mit Linsen 2 bedarfsweise (gleichzeitig) aufnehmen können. Der Begriff "Freifahren" ist dann dementsprechend dahingehend zu verstehen, dass die jeweilige Bearbeitungseinrichtung 3 bzw. deren Fördereinrichtung 8 zur Aufnahme einer Linse 2 bzw. eines Transportträgers 5 bereit ist, selbst wenn sich noch eine oder mehrere Linsen 2 bzw. Transportträger 5 in der Bearbeitungseinrichtung 3 bzw. deren Fördereinrichtung 8 befinden.

Wie bereits erwähnt, kann die Zuförderung beim Darstellungsbeispiel insbesondere wahlweise von dem Aufnahmebereich 19 einer vorgeordneten Transfereinrichtung 9 und/oder durch Querförderung über die Fördereinrichtung 15 und anschließende Längsförderung über die Fördereinrichtung 14 der vorgeordneten Transfereinrichtung 9, insbesondere also auch durch direkte Zuförderung von der Hauptspur H, erfolgen.

Vorzugsweise steuert die Steuereinrichtung 12 und/oder die Anforderung der jeweiligen Bearbeitungseinrichtung 3 und/oder eine Priorisierung von Bearbeitungen bzw. Linsen 2 durch die Systemsteuerung 20 den Ablauf bzw. die Zuförderung.

Die bereits zuvor von der Bearbeitungseinrichtung 3 bearbeitende Linse 2 bzw. der diese tragende Transportträger 5 kann von der nachgeordneten Transfereinrichtung 9 aufgenommen und bei Bedarf im Aufnahmebereich 19 am Ausgang der Bearbeitungseinrichtung 3 bzw. deren Fördereinrichtung 8 zwischengespeichert werden. Jedoch kann ggf. auch direkt eine Weiterförderung ohne Anhalten erfolgen.

Die Weiterförderung kann darin bestehen, dass die Linse 2 bzw. der Transportträger 5 an die nächste Bearbeitungseinrichtung 3, also in die Förderrichtung F weiter entlang der Nebenspur N weitergefördert wird, also der nächsten Bearbeitungseinrichtung 3 bzw. deren Fördereinrichtung 8 zugefördert wird. Alternativ kann auch eine Querförderung mittels der Fördereinrichtung 15 und ein Wechsel in die Hauptspur H erfolgen. So kann dann eine Weiterförderung zu einer anderen Bearbeitungseinrichtung 3 oder ggf. zur Abgabe 6 erfolgen.

Die Transfer- bzw. Steuereinrichtung 12 dient insbesondere der Steuerung des Produktionsflusses bzw. der Förderung der Linsen 2 bzw. Transportträger 5, wie der Zirkulation bzw. Kreisförderung K und/oder Förderung von Linsen 2 bzw. Transportträgern 5 zu Bearbeitungseinrichtungen 3 und von diesen weg.

Besonders bevorzugt steuert die Steuereinrichtung 12 die Transfereinrichtungen 9, Fördereinrichtungen 10 und/oder Wechseleinrichtungen 11, Fördereinrichtungen 14 zur Längsförderung, Fördereinrichtungen 15 zur Querförderung und/oder Stoppeinrichtungen 18, wobei die Transfereinrichtungen 9 vorzugsweise ergänzend oder alternativ auch von den Bearbeitungseinrichtungen 3 bzw. deren Maschinensteuerung 17 - insbesondere bei Anschluss an das Bussystem 13 - (direkt) gesteuert werden können.

Die Systemsteuerung 20 steuert vorzugsweise die Zuordnung der Linsen 2 bzw. Transportträger 5 zu der nächsten Bearbeitung bzw. Bearbeitungseinrichtung 3 und/oder das gruppenweise Routing.

Die Systemsteuerung 20 bildet vorzugsweise ein Linsenmanagementsystem und/oder eine Anlagensteuerung.

Die Systemsteuerung 20 dient insbesondere der Annahme oder Erfassung von Aufträgen und/oder der Verwaltung von Aufträgen, Produktionsdaten und/oder Linsenrohlingen und/oder der Bereitstellung von Schnittstellen zu anderen Systemen, beispielsweise zu Systemen oder Modulen für das Linsendesign, die insbesondere in Abhängigkeit von gewünschten optischen Eigenschaften die gewünschte geometrische Gestalt von Linsen 2 und/oder die erforderlichen Bearbeitungen bzw. Bearbeitungsschritte bestimmen.

Insbesondere werden in der Systemsteuerung 20 (oder einem sonstigen Server oder Datenspeicher) Produktionsdaten P, die insbesondere Bearbeitungspläne (Bearbeitungsschritte und/oder -reihenfolgen oder -abfolgen) und Bearbeitungsstati (Bearbeitungszustände bzw. Informationen über als nächstes auszuführende Bearbeitungen) beinhalten, verwaltet und/oder erzeuget.

Generell ist anzumerken, dass die erforderlichen Bearbeitungsschritte und deren Reihenfolge, um aus einem Rohling ein bearbeitetes bzw. fertiges Werkstück zu fertigen, vorzugsweise in einem sogenannten Bearbeitungsplan festgelegt sind bzw. werden, aber dass bei mehreren Bearbeitungseinrichtungen 3 für die gleiche Bearbeitung, beispielsweise für das Polieren, die jeweils konkret zu benutzende Einrichtung ausgewählt werden kann.

Die bevorzugte unabhängige Bearbeitung durch die Bearbeitungseinrichtungen 3 ist vorzugsweise so zu verstehen, dass die Bearbeitung in der jeweiligen Einrichtung unabhängig von anderen Bearbeitungen und unabhängig von dem Transfersystem 4 abläuft, wobei aber die Reihenfolge der Bearbeitungsschritte vorgegeben ist bzw. erhalten bleibt. Der tatsächliche Bearbeitungszustand spiegelt sich im Bearbeitungsstatus wider, der insbesondere angibt, welche Bearbeitung schon erfolgt ist oder als nächstes erfolgen soll, wobei dies besonders bevorzugt unter Verweis auf den entsprechenden Bearbeitungsplan für das jeweilige Werkstück erfolgt.

Einzelne Aspekte und Merkmale der beschriebenen Anlage 1 sowie der beschriebenen Abläufe, Verfahren und verschiedenen Ausführungsbeispiele können auch unabhängig voneinander, aber auch in beliebiger Kombination realisiert werden.

### Bezugszeichenliste

- 1: Anlage (generell)
- 2: Linse
- 3: Bearbeitungseinrichtung (generell)
- 3A: Bearbeitungseinrichtung zum formgebenden Bearbeiten
- 3B: Bearbeitungseinrichtung zum Polieren
- 3C: Bearbeitungseinrichtung zum Prüfen
- 3D: Bearbeitungseinrichtung zum Markieren
- 4: Transfersystem
- 5: Transportträger
- 5A: Kodierung
- 6: Abgabe
- 7: Aufnahme
- 8: Fördereinrichtung (Bearbeitungseinrichtung)
- 9: Transfereinrichtung
- 10: Fördereinrichtung (Hauptspur)
- 10A: Gurt
- 10B: Antrieb
- 11: Wechseleinrichtung
- 12: Steuereinrichtung
- 13: Bussystem
- 14: Fördereinrichtung (Längsförderung, Transfereinrichtung)
- 14A: Gurt
- 14B: Antrieb
- 15: Fördereinrichtung (Querförderung)
- 15A: Gurt
- 15B: Antrieb
- 15C: Hubtisch
- 15D: Gurt
- 15E: Anschlag
- 16: Sensor
- 17: Maschinensteuerung
- 18: Stoppeinrichtung
- 19: Aufnahmebereich
- 20: Systemsteuerung
- 21: Speichereinrichtung
- 22: Stoppbereich

- F: Förderrichtung
- G: Gruppe von Transporträgern
- H: Hauptspur
- K: Kreisförderung
- N: Nebenspur
- R: Reihe
- Z: Zwischenbereich

## Patentansprüche

1. Verfahren zur Bearbeitung optischer Werkstücke, insbesondere Brillengläsern bzw. Brillenglasrohlingen,
wobei die Werkstücke vorzugsweise paarweise in Transportträgern (5) mittels eines Transfersystems (4) zu und von separaten Bearbeitungseinrichtungen (3) gefördert werden,
wobei eine Hauptspur (H) für die Förderung der Transportträger (5) an den Bearbeitungseinrichtungen (3) vorbei und - insbesondere zusammen mit den Bearbeitungseinrichtungen (3) - eine Nebenspur zur Förderung der Transportträger (5) zu und von den Bearbeitungseinrichtungen (3) gebildet wird,
wobei die Transportträger (5) mittels Transfereinrichtungen (9) des Transfersystems (4) zwischen den Spuren durch Querförderung wechseln können,
**dadurch gekennzeichnet,**
**dass** eine Gruppe (G) von mindestens zwei Transportträgern (5) mit Werkstücken für eine Bearbeitung in derselben Bearbeitungseinrichtung (3) unmittelbar nacheinander über dieselbe Transfereinrichtung (9) zu derselben Bearbeitungseinrichtung (3) zur Optimierung des Durchsatzes der Anlage (1) zugefördert wird, und/oder
**dass** die Querförderung eines Transportträgers (5) mittels einer Transfereinrichtung (9) zur Optimierung des Durchsatzes der Anlage (1) bereits dann beginnt, wenn ein zuvor von derselben Transfereinrichtung (9) quergeförderter Transportträger (5) einen Zwischenbereich (Z) zwischen den Spuren (H, N) verlassen und/oder die andere Spur (H, N) erreicht hat.

2. Verfahren nach Anspruch 1, **dadurch gekennzeichnet, dass** die Gruppe (G) von Transportträgern (5) mit Werkstücken für eine Bearbeitung in derselben Bearbeitungseinrichtung (3) unmittelbar nacheinander auf der Hauptspur (H) derselben Transfereinrichtung (9) zugefördert werden.

3. Verfahren nach Anspruch 2, **dadurch gekennzeichnet, dass** zur Bildung der Gruppe von Transportträgern (5) mit Werkstücken für eine Bearbeitung in derselben Bearbeitungseinrichtung (3) einer der Transportträger (5) in einem Aufnahmebereich (19) am Ausgang einer vorherigen Bearbeitungseinrichtung (3) zwischengespeichert wird, bis er unmittelbar hinter oder vor den anderen Transportträger (5) auf die Hauptspur (H) eingeschleust oder bis er unmittelbar hinter oder vor einem Transportträger (5) auf der Nebenspur (N) weitergefördert werden kann.

4. Verfahren nach einem der voranstehenden Ansprüche, **dadurch gekennzeichnet, dass** ausgehend von der Hauptspur (H) die Querförderung eines zweiten Transportträgers (5) mittels einer Transfereinrichtung (9) bereits dann beginnt, wenn ein erster, zuvor von derselben Transfereinrichtung (9) quergeförderter Transportträger (5) einen Zwischenbereich (Z) zwischen den Spuren (H, N) verlassen hat und/oder die andere Spur (H, N) erreicht hat.

5. Verfahren nach Anspruch 4, **dadurch gekennzeichnet, dass** der zweite Transportträger (5) dann in den Zwischenbereich (Z) gefördert und die Hauptspur (H) wieder freigegeben wird.

6. Verfahren nach einem der voranstehenden Ansprüche, **dadurch gekennzeichnet, dass** zwei oder mehr Transportträger (5) unmittelbar nacheinander über dieselbe Transfereinrichtung (9) zu derselben Bearbeitungseinrichtung (3) erst dann zugefördert werden, wenn mindestens zwei oder mehr Aufnahmebereiche (19) für die Transportträger (5) vor oder stromauf dieser Bearbeitungseinrichtung (3) frei sind.

7. Verfahren nach einem der voranstehenden Ansprüche, **dadurch gekennzeichnet, dass** einzelne Transportträger (5) zirkuliert oder - insbesondere in einer Speichereinrichtung (21) - zwischengespeichert werden, bis eine Gruppe (G)von Transportträgern (5) gebildet werden kann, die unmittelbar nacheinander - insbesondere über dieselbe Transfereinrichtung (9) - zu derselben Bearbeitungseinrichtung (3) bzw. einer nachgeordneten Bearbeitung gefördert werden.

8. Anlage (1) zur Bearbeitung optischer Werkstücke, insbesondere Brillengläsern bzw. Brillenglasrohlingen,
mit mehreren Bearbeitungseinrichtungen (3) zur Bearbeitung der Werkstücke,
mit einem Transfersystems (4) zur Förderung von Transportträgern (5) mit den Werkstücken zu und von den Bearbeitungseinrichtungen (3),
wobei die Anlage (1) und/oder das Transfersystem (4) eine Hauptspur (H) für die Förderung der Transportträger (5) an den Bearbeitungseinrichtungen (3) vorbei und - insbesondere zusammen mit den Bearbeitungseinrichtungen (3) - eine Nebenspur (N) zur Förderung der Transportträger (5) zu und von den Bearbeitungseinrichtungen (3) bildet,
wobei das Transfersystem (4) mehrere Transfereinrichtungen (9) aufweist, so dass die Transportträger (5) mittels der Transfereinrichtungen (9) zwischen den Spuren (H, N) durch Querförderung wechseln können,
**dadurch gekennzeichnet,**
**dass** die Anlage (1) derart ausgebildet ist, dass zwei oder mehr Transportträger (5) unmittelbar nacheinander über dieselbe Transfereinrichtung (9) zu derselben Bearbeitungseinrichtung (3) zur Optimierung des Durchsatzes der Anlage (1) zugefördert werden, und/oder
**dass** die Anlage (1) derart ausgebildet ist, dass die Querförderung eines Transportträgers (5) mittels einer Transfereinrichtung (9) zur Optimierung des Durchsatzes der Anlage (1) bereits dann beginnt, wenn ein zuvor von derselben Transfereinrichtung (9) quergeförderter Transportträger (5) einen Zwischenbereich (Z) zwischen den Spuren (H,N) verlassen und/oder die andere Spur (H, N) erreicht hat.

9. Anlage nach Anspruch 8, **dadurch gekennzeichnet, dass** die Anlage (1) derart ausgebildet ist, dass die zwei oder mehr Transportträger (5) mit Werkstücken für eine Bearbeitung in derselben Bearbeitungseinrichtung (3) unmittelbar nacheinander auf der Hauptspur (H) derselben Transfereinrichtung (9) zur Optimierung des Durchsatzes der Anlage (1) zugefördert werden.

10. Anlage nach Anspruch 9, **dadurch gekennzeichnet, dass** die Anlage (1) derart ausgebildet ist, dass zur Bildung einer Gruppe (G) von zwei oder mehr Transportträgern (5) mit Werkstücken für eine Bearbeitung in derselben Bearbeitungseinrichtung (3) einer der Transportträger (5) in einem Aufnahmebereich (19) am Ausgang einer vorherigen Bearbeitungseinrichtung (3) zwischengespeichert wird, bis er unmittelbar hinter oder vor den anderen Transportträger (5) auf die Hauptspur (H) eingeschleust oder bis er unmittelbar hinter oder vor einem Transportträger (5) auf der Nebenspur (N) weitergefördert werden kann.

11. Anlage nach einem der Ansprüche 8 bis 10, **dadurch gekennzeichnet, dass** die Anlage (1) derart ausgebildet ist, dass ausgehend von der Hauptspur (H) die Querförderung eines zweiten Transportträgers (5) mittels einer Transfereinrichtung (9) bereits dann beginnt, wenn ein erster, zuvor von derselben Transfereinrichtung (9) quergeförderter Transportträger (5) einen Zwischenbereich (Z) zwischen den Spuren (H, N) verlassen hat und/oder die andere Spur (H, N) erreicht hat.

12. Anlage nach Anspruch 11, **dadurch gekennzeichnet, dass** die Anlage (1) derart ausgebildet ist, dass der zweite Transportträger (5) dann in den Zwischenbereich (Z) gefördert und die Hauptspur (H) wieder freigegeben wird.

13. Anlage nach einem der Ansprüche 8 bis 12, **dadurch gekennzeichnet, dass** die Anlage (1) derart ausgebildet ist, dass zwei oder mehr Transportträger (5) unmittelbar nacheinander über dieselbe Transfereinrichtung (9) zu derselben Bearbeitungseinrichtung (3) erst dann zugefördert werden, wenn mindestens zwei oder mehr Aufnahmebereiche (19) für die Transportträger (5) vor oder stromauf dieser Bearbeitungseinrichtung (3) frei sind.

14. Anlage nach einem der Ansprüche 8 bis 13, **dadurch gekennzeichnet, dass** die Anlage (1) derart ausgebildet ist, dass einzelne Transportträger (5) zirkuliert werden, bis eine Gruppe (G) von zwei oder mehr Transportträgern (5) gebildet werden kann, die unmittelbar nacheinander über dieselbe Transfereinrichtung (9) zu derselben Bearbeitungseinrichtung (3) zugefördert werden, und/oder dass die Anlage (1) eine Speichereinrichtung (21) zur Zwischenspeicherung von Transportträgern (21) aufweist und zur Bildung einer Gruppe (G) von Transportträgern (5) für eine Zuförderung oder Weiterförderung an eine nachfolgende Bearbeitung oder Bearbeitungseinrichtung (3), beispielsweise zur Reinigung, Messung oder Beschichtung, ausgebildet ist.

15. Verwendung einer Anlage (1) zur Bearbeitung optischer Werkstücke, insbesondere Brillengläsern bzw. Brillenglasrohlingen, mit mehreren Bearbeitungseinrichtungen (3) zur Bearbeitung der Werkstücke und mit einem Transfersystems (4) zur wahlweisen Förderung von Transportträgern (5) mit den Werkstücken zu und von einer Bearbeitungseinerichtung (3), insbesondere von und zu mehreren bzw. verschiedenen Bearbeitungseinrichtungen (3),
**dadurch gekennzeichnet,**
**dass** zur Optimierung des Durchsatzes der Anlage (1) und/oder für eine nachfolgende Bearbeitung eine Gruppe (G) von zwei oder mehr Transportträgern (5) gebildet wird, deren Transportträger (5) zwischengespeichert und/oder unmittelbar nacheinander von dem Transfersystem (4) derselben Bearbeitungseinrichtung (3) zugefördert oder an eine nachgeordnete Bearbeitung weitergefördert werden.

## Geänderte Patentansprüche

### Geänderte Patentansprüche gemäss Regel 137(2) EPÜ.

1. Verfahren zur Bearbeitung optischer Werkstücke, insbesondere Brillengläsern bzw. Brillenglasrohlingen,
wobei die Werkstücke vorzugsweise paarweise in Transportträgern (5) mittels eines Transfersystems (4) zu und von separaten Bearbeitungseinrichtungen (3) gefördert werden,
wobei eine Hauptspur (H) für die Förderung der Transportträger (5) an den Bearbeitungseinrichtungen (3) vorbei und - insbesondere zusammen mit den Bearbeitungseinrichtungen (3) - eine Nebenspur (N) zur Förderung der Transportträger (5) zu und von den Bearbeitungseinrichtungen (3) gebildet wird,
wobei die Transportträger (5) mittels Transfereinrichtungen (9) des Transfersystems (4) zwischen den Spuren durch Querförderung wechseln können,
**dadurch gekennzeichnet,**
**dass** eine Gruppe (G) von mindestens zwei Transportträgern (5) mit Werkstücken für eine Bearbeitung in derselben Bearbeitungseinrichtung (3) unmittelbar nacheinander über dieselbe Transfereinrichtung (9) zu derselben Bearbeitungseinrichtung (3) zur Optimierung des Durchsatzes der Anlage (1) zugefördert wird, und/oder
**dass** die Querförderung eines Transportträgers (5) mittels einer Transfereinrichtung (9) zur Optimierung des Durchsatzes der Anlage (1) bereits dann beginnt, wenn ein zuvor von derselben Transfereinrichtung (9) quergeförderter Transportträger (5) einen Zwischenbereich (Z) zwischen den Spuren (H, N) verlassen und/oder die andere Spur (H, N) erreicht hat.

2. Verfahren nach Anspruch 1, **dadurch gekennzeichnet, dass** die Gruppe (G) von Transportträgern (5) mit Werkstücken für eine Bearbeitung in derselben Bearbeitungseinrichtung (3) unmittelbar nacheinander auf der Hauptspur (H) derselben Transfereinrichtung (9) zugefördert werden.

3. Verfahren nach Anspruch 2, **dadurch gekennzeichnet, dass** zur Bildung der Gruppe von Transportträgern (5) mit Werkstücken für eine Bearbeitung in derselben Bearbeitungseinrichtung (3) einer der Transportträger (5) in einem Aufnahmebereich (19) am Ausgang einer vorherigen Bearbeitungseinrichtung (3) zwischengespeichert wird, bis er unmittelbar hinter oder vor den anderen Transportträger (5) auf die Hauptspur (H) eingeschleust oder bis er unmittelbar hinter oder vor einem Transportträger (5) auf der Nebenspur (N) weitergefördert werden kann.
